# EUROPEAN PATENT APPLICATION

(11) **EP 3 026 300 A1**
(43) Date of publication of application: **01.06.2016**
(21) Application number: 15196003.6
(22) Date of filing: 24.11.2015
(51) Int. Cl.: F16H 57/04

(54) **OIL GUTTER AND TRANSMISSION PROVIDED WITH THE SAME**

(30) Priority: 27.11.2014 JP 2014240373; 27.11.2014 JP 2014240372
(71) Applicant: Aichi Machine Industry Co. Ltd., Nagoya-shi, Aichi 456-8601 (JP)
(72) Inventor: HOSONO, Kiyohito, Nagoya-shi, Aichi 456-8601 (JP); SAKURAI, Hirohito, Nagoya-shi, Aichi 456-8601 (JP); SATO, Kazuhiko, Nagoya-shi, Aichi 456-8601 (JP); AOYAMA, Hideki, Nagoya-shi, Aichi 456-8601 (JP)
(74) Representative: Global IP Europe Patentanwaltskanzlei

(57) **Abstract**

An introduction section 30 of an oil gutter 20 is partitioned into a first introduction section 42 and a second introduction section 52 in the extension direction of the introduction section 30 by a partition wall 36. Then, an upwardly inclining section 44a which inclines upward in a direction away from the partition wall 36 is formed on a bottom surface 44 of the first introduction section 42 and a bottom surface 58 of the second introduction section 52 is formed to incline downward toward a through opening 38 side. Due to this, lubricant oil scooped up by a ring gear 9 collides with the partition wall 36 and is guided to a through opening 37 side to be introduced into a flow path section 60. On the other hand, lubricant oil which passes beyond the partition wall 36 is introduced into the second introduction section 52 to be introduced into the flow path section 60 from the through opening 38. Here, the flow of the lubricant oil trying to flow back is suppressed by the upwardly inclining section 44a and the flow of lubricant oil to the side of the through openings 37 and 38 is promoted by the upwardly inclining section 44a and the downward inclination of the bottom surface 58.

## Description

### Field of the Invention

The present invention relates to an oil gutter and a transmission provided with the same.

### Background

JP 2011-7208A describes an oil gutter comprising an introduction section extending in a direction tangential to a ring gear, and a flow path section extending in the rotational axis direction of the ring gear to be perpendicular to the introduction section. The oil gutter supplies lubricant oil from the flow path section to locations requiring lubrication in the tooth surfaces of each gear, a synchro mechanism, or the like by introducing lubricant oil scooped up by the ring gear from the introduction section to flow through the flow path section.

By providing this oil gutter with a vertical wall extending up to the vicinity of the upper inner wall of the transmission case at a position opposing the splashing direction of the lubricant oil scooped up by the ring gear, the splashing lubricant oil collides with the vertical wall such that the lubricant oil flowing down the inner wall is collected.

However, in the oil gutter described above, since the collision energy of the lubricant oil also increases as the number of rotations of the ring gear increases, the lubricant oil flows back to the introduction section following a collision with the vertical wall when the number of rotations of the ring gear is high and the collection efficiency deteriorates, which leads to a deterioration in the lubrication performance.

An object of the present invention is to provide a technique capable of improving the lubrication performance in consideration of the above.

### Summary

The oil gutter and the transmission provided therewith of the present invention adopt the following means in order to achieve the object described above.

According to a first aspect of an oil gutter according to the present invention, an oil gutter for collecting lubricant oil scooped up by a rotation member and suppling to outside parts requiring lubrication comprises:
an introduction section extending in a splashing direction of lubricant oil scooped up by the rotation member rotating in a first rotation direction, and collecting the lubricant oil scooped up by the rotation member; and
a supply flow passage extending in a direction intersecting with an extension direction of the introduction section for supplying the lubricant oil collected to the introduction section to the outside parts requiring the lubricant oil,
wherein
the introduction section is partitioned into a first introduction section and a second introduction section by a partition wall interposed between the first and second introduction sections,
the first introduction section is arranged on an upstream side in the splashing direction relative to the partition wall, and has a suppression section configured to suppress the lubricant oil to flow back to a direction opposing to the splashing direction,
the second introduction section is arranged on a downstream side in the splashing direction relative to the partition wall, and has a bottom surface inclining downward toward the supply flow passage,
a first opening is formed in the first introduction section to guide the lubricant oil from the first introduction section into the supply flow passage, and
a second opening is formed in the second introduction section to guide the lubricant oil from the second introduction section into the supply flow passage.

The "splashing direction" in the present invention typically corresponds to a direction orthogonal to the rotation axis of the rotation member, for example, the direction tangential to the rotation member corresponds to the "splashing direction". Here, "a direction orthogonal to the rotation axis of the rotation member" corresponds to a direction which has a directional vector where the inner product is zero with respect to the directional vector of the rotation axis of the rotation member. In addition, "the rotation member rotates in the first rotation direction" in the present invention corresponds to an aspect where the rotation member rotates clockwise or counter-clockwise. Furthermore, the "intersecting direction" in the present invention typically corresponds to a substantially perpendicular direction. In addition, "the upstream side in the splashing direction" in the present invention typically corresponds to the upstream side in the splashing direction. The "downstream side in the splashing direction" in the present invention typically corresponds to the deeper side, i.e. the leading and downstream side in the splashing direction.

According to the oil gutter above, the introduction section into which lubricant oil scooped up by the rotation member is introduced is configured to be partitioned into the first introduction section and the second introduction section by the partition wall. Thus, lubricant oil splashed when the rotation speed of the rotation member is comparatively low collides with the partition wall to collect in the first introduction section and can be introduced from the first opening into the supply flow passage. Also, when the rotation speed of the rotation member is high and the lubricant oil starts to go beyond the partition wall, the lubricant oil which goes beyond is collected in the second introduction section and can be introduced from the second opening into the supply flow passage.

Here, because the first introduction section has the suppression section which suppresses the flow in the opposite direction to the splashing direction of the lubricant oil, it is possible to suppress the lubricant oil which collided with the partition wall from flowing back in the first introduction section. In addition, because the bottom surface of the second introduction section is configured to have a downward inclination toward the supply flow passage, the lubricant oil collected in the second introduction section can be quickly introduced into the supply flow passage. Due to this, the lubricant oil can be efficiently collected regardless of the rotation speed of the rotation member and the lubricant oil can be quickly supplied to parts requiring lubrication. As a result, the lubrication performance is improved.

According to a preferred embodiment of the oil gutter mentioned above, the partition wall is configured to guide the lubricant oil colliding with the partition wall toward the supply flow passage.

With the configuration above, by being able to suppress the lubricant oil from remaining in the first introduction section, the lubricant oil can be quickly introduced into the supply flow passage. Due to this, the lubrication performance is improved.

According to another preferred embodiment of any one of the oil gutters mentioned above, the partition wall is configured to have a curved surface which is convex on the second introduction section side. Here, the "curved surface" typically corresponds to an arc shape.

With the configuration above, since the flow direction of the lubricant oil can be smoothly changed, the lubricant oil can be introduced more quickly into the supply flow passage than when the partition wall is a flat surface.

According to further another preferred embodiment of any one of the oil gutters mentioned above, the first introduction section has a bottom surface inclining upward in a direction away from the partition wall so as to form the suppression section.

With the configuration above, the flowing back of the lubricant oil can be suppressed with a simple configuration. In addition, it is possible to more effectively introduce the lubricant oil collected in the first introduction section into the supply flow passage using the inclination.

According to further another preferred embodiment of any one of the oil gutters mentioned above, the introduction section has a passage section configured to extend in the splashing direction of the lubricant oil scooped up by the rotation member rotating in the first rotation direction, both ends in an extension direction of the passage section are opened and one of the openings communicates with the first introduction section such that a part of the lubricant oil introduced into the first introduction section flows into the passage section via the one opening and flows out via the other opening.

With the configuration above, the lubricant oil can be favorably supplied even to parts requiring lubrication arranged on the side opposite to, with respect to the splashing direction of the lubricant oil, the side where the rotation member is arranged. Due to this, the lubrication performance can be further improved.

According to further another preferred embodiment of any one of the oil gutters mentioned above, the first introduction section has a bottom surface including a lower surface and an upper surface, the lower surface being configured to face to an outer peripheral surface of the rotation member, the upper surface being configured to face to a direction opposite toward the outer peripheral surface of the rotation member such that the lubricant oil introduced into the first introduction section can flow downstream, and a through hole being formed in the bottom surface to pass through the upper surface and the lower surface. In addition, the lower surface includes a guiding-and-reversing section configured such that the lubricant oil scooped up by the rotation member rotating in a second rotation direction is guided to the through hole and introduced via the through hole to the upper surface by reversing a splashing direction of the lubricant oil scooped up by the rotation member rotating in the second direction, the second direction being a direction opposite to the first rotation direction.

Here, the "second rotation direction" corresponds to counter-clockwise when the "first rotation direction" is clockwise and corresponds to clockwise when the "first rotation direction" is counter-clockwise. In addition, "flow downstream" in the present invention corresponds to an aspect where the lubricant oil flowing in the first introduction section flows toward the opposite side to the side where the scooped up lubricant oil is introduced into the first introduction section.

Since the oil gutter of the present embodiment is configured such that lubricant oil scooped up by the rotation member is introduced to the upper surface of the bottom surface of the first introduction section when the rotation member rotates in the first rotation direction and lubricant oil scooped up by the rotation member when the rotation member rotates in the second rotation direction is introduced to the upper surface of the bottom surface of the first introduction section via a through hole by reversing the splashing direction using the guiding-and-reversing section arranged on the lower surface of the bottom surface of the first introduction section, it is possible to collect a sufficient amount of lubricant oil regardless of the rotation direction of the rotation member.

According to further another preferred embodiment of any one of the oil gutters mentioned above, the guiding-and-reversing section has first and second protrusions configured to protrude from the lower surface toward the outer peripheral surface of the rotation member, the distance between the first and second protrusions gradually becomes smaller on the downstream side than the upstream side with respect to the splashing direction of the lubricant oil scooped up by the rotation member rotating in the second rotation direction, the first and second protrusions are connected with each other at the downstream-side end portion of the guiding-and-reversing section with respect to the splashing direction to be substantially V shaped or U shaped in plan view, and the through hole is formed in a vicinity of a connection section of the first and second protrusions within a region interposed between the first and second protrusions.

Here, the "upstream side with respect to the splashing direction" typically corresponds to the upstream side in the splashing direction of the lubricant oil scooped up by the rotation member rotating in the second rotation direction. The "downstream side with respect to the splashing direction" typically corresponds to the deeper side, i.e. the leading and downstream side in the splashing direction of the lubricant oil scooped up by the rotation member rotating in the second rotation direction.

With the configuration above, because the first and second protrusions are configured to be substantially V shaped or U shaped in plan view by connecting the first and second protrusions at the downstream side in the splashing direction of the lubricant oil scooped up by the rotation member rotating in the second rotation direction and configured with a through hole arranged at a top point or in the vicinity of a top section of the V shape or U shape which is in an inner side region of the V shape or the U shape, the splashing lubricant oil can be effectively guided to the through hole with a simple configuration and the splashing direction of the lubricant oil can be reversed.

According to further another preferred embodiment of any one of the oil gutters mentioned above, the through hole is formed in the bottom surface of the first introduction section on a left-side end section or a right-side end section with respect to the extension direction of the first introduction section.

Because the oil gutter of the present embodiment is configured such that the main flow of the lubricant oil scooped up by the rotation member rotating in the first rotation direction and introduced into the first introduction section to flow downstream on the upper surface of the bottom surface of the first introduction section is not easily influenced by the through hole, it is possible to suppress deterioration in the collection efficiency of the lubricant oil.

According to further another preferred embodiment of any one of the oil gutters mentioned above, the through hole is formed in the suppression section.

Because the oil gutter of the present embodiment is configured with the through hole formed in the suppression section formed to incline upward in a direction away from the partition wall, lubricant oil for which the splashing direction is reversed by the guiding and reversing section is easily introduced from the through hole into the upper surface side of the bottom surface of the first introduction section. Due to this, the lubricant oil can be efficiently collected when the rotation member rotates in the second rotation direction.

According to further another preferred embodiment of any one of the oil gutters mentioned above, the upper surface includes a prevention wall configured to prevent the lubricant oil scooped up by the rotation member rotating in the first rotation direction and flowing downstream on the upper surface of the first introduction section from flowing out from the through hole.

With the configuration above, the lubricant oil scooped up by the rotation member rotating in the first rotation direction and flowing downstream on the upper surface of the first introduction section can be prevented from flowing out from the through hole. Due to this, it is possible to further suppress deterioration in the collection efficiency of the lubricant oil. In addition, because the splashing direction of the lubricant oil scooped up and splashed by the rotation member rotating in the second rotation direction can also be reversed by the prevention wall in addition to the guiding and reversing section, it is possible to improve the collection efficiency of the lubricant oil when the rotation member rotates in the second rotation direction.

According to further another preferred embodiment of any one of the oil gutters mentioned above, the through hole is formed to extend along the extension direction of the first introduction section, the prevention wall includes a first wall section and a second wall section, the first wall section extending in a direction intersecting with the extension direction of the first introduction section, and the second wall section being continuous with the first wall section and extending in a direction along the extension direction of the first introduction section, and the second wall section extends up to a substantially central section of the through hole with respect to the extension direction.

With the configuration above, because the second wall section is configured to extend across the substantially central section of the through hole in the longitudinal direction, it is possible to effectively prevent the lubricant oil flowing downstream on the upper surface of a bottom wall section from flowing out from the through hole. Due to this, it is possible to further suppress deterioration in the collection efficiency of the lubricant oil in the oil gutter in the aspect comprising the prevention wall.

A second aspect of the present invention provides a transmission comprising an input shaft; an output shaft; a gear mechanism configured to transmit rotation of the input shaft to the output shaft with a changeable gear ratio; a differential mechanism configured to transmit rotation transmitted to the output shaft to an axle; any one of the oil gutters mentioned above; a case accommodating the input shaft, the output shaft, the gear mechanism, the differential mechanism, and the oil gutter, wherein the differential mechanism has a ring gear, and the transmission is configured such that the oil gutter collects the lubricant oil scooped up by the ring gear and supplies the collected lubricant oil to the gear mechanism. A typical example of the gear mechanism utilized in the present invention is a driving gear, a driven gear to engage with the driving gear, and synchro mechanisms.

with the configuration above, since any one of the oil gutters mentioned above is provided with the transmission, it is possible to exhibit the same effects as exhibited by the oil gutter of the present invention. For example, an effect of being able to improve the lubrication performance, or the like, or an effect of being able to collect sufficient lubricant oil regardless of the rotation direction of the rotation member which scoops up the lubricant oil, or the like can be achieved.

According to a preferred embodiment of the transmission above, the oil gutter is configured such that the through hole is formed in the bottom surface of the first introduction section on a left-side end section or a right-side end section with respect to the extension direction of the first introduction section, and the ring gear is configured as a helical gear having a twisting direction which directs the lubricant oil scooped up toward the through hole when the ring gear rotates in the second rotation direction.

With the configuration above, because the lubricant oil can be effectively directed to the through hole when the ring gear rotates in the second rotation direction, sufficient lubricant oil can be collected regardless of the rotation direction of the ring gear. Here, since the scooped up lubricant oil is directed in the opposite direction to the through hole when the ring gear rotates in the first rotation direction, it is possible to suppress the lubricant oil introduced to the upper surface of the oil gutter to flow downstream from flowing out from the through hole. Due to this, it is possible to suppress deterioration in the collection efficiency of the lubricant oil.

In the ring gear, the tooth traces are inclined upward to the right with respect to the rotational axis along the vertical direction when viewed from the front. The through hole is formed in the bottom surface of the first introduction section on a left-side end section with respect to the extension direction of the first introduction section when facing to the first opening.

In the ring gear, the tooth traces are inclined upward to the left with respect to the rotational axis along the vertical direction when viewed from the front. The through hole is formed in the bottom surface of the first introduction section on a right-side end section with respect to the extension direction of the first introduction section when facing to the first opening.

According to another preferred embodiment of the transmission above, the case has a protrusion at a position above the second introduction section, and the protrusion, the ring gear, and the second introduction section are configured such that a part of the lubricant oil scooped up by the ring gear rotating in the first rotation direction is introduced into the second introduction section by colliding with the protrusion and is conveyed along the protrusion.

With the above configuration above, even when the lubricant oil scooped up by the ring gear rotating in the first rotation direction splashes beyond the top of the oil gutter, the lubricant oil can be collected in the second introduction section by the lubricant oil colliding with the protrusion and being conveyed along the protrusion. Due to this, the lubricant oil can be more efficiently collected. As a result, the lubrication performance is improved.

A third aspect of the present invention provides a transmission comprising an input shaft; an output shaft; a gear mechanism transmitting rotation of the input shaft to the output shaft with a changeable gear ratio; any one of the oil gutters mentioned above; and a case accommodating the input shaft, the output shaft, the gear mechanism, and the oil gutter, wherein the gear mechanism has a plurality of gears, and the transmission is configured such that the lubricant oil scooped up by at least one of the gears is collected in the oil gutter and the collected lubricant oil is supplied to the gear mechanism. A typical example of the gear mechanism utilized in the present invention is a driving gear, a driven gear to engage with the driving gear, and synchro mechanisms.

With the configuration above, since any one of the oil gutters mentioned above is provided with the transmission, it is possible to exhibit the same effects as the effects exhibited by the oil gutter of the present invention. For example, an effect of being able to improve the lubrication performance, an effect of being able to collect sufficient lubricant oil regardless of the rotation direction of the rotation member which scoops up the lubricant oil, or the like can be achieved.

According to a preferred embodiment of the transmission above, the case has a protrusion at a position above the second introduction section, and the protrusion, the at least one of the gears, and the second introduction section are configured such that a part of lubricant oil scooped up by the gear rotating in the first rotation direction is introduced into the second introduction section by colliding with the protrusion and is conveyed along the protrusion.

With the configuration above, even when the lubricant oil scooped up by the gear rotating in the first rotation direction splashes beyond the top of the oil gutter, the lubricant oil can be collected in the second introduction section by colliding with the protrusion and being conveyed along the protrusion. Due to this, the lubricant oil can be more efficiently collected. As a result, the lubrication performance is improved.

### Brief Description of the Drawings

FIG. 1 is schematic configuration diagram illustrating a schematic of the configuration of a transmission 1 comprising an oil gutter 20 according to an embodiment of the present invention.
FIG. 2 is a cross-sectional diagram illustrating a cross-section taken along A-A in FIG. 1.
FIG. 3 is an enlarged diagram illustrating an enlarged E section in FIG. 2.
FIG. 4 is a perspective diagram of the oil gutter 20 according to the embodiment of the present invention.
FIG. 5 is a perspective diagram of the oil gutter 20 according to the embodiment of the present invention.
FIG. 6 is a planar diagram of the oil gutter 20 according to the embodiment of the present invention.
FIG. 7 is a cross-sectional diagram illustrating a cross-section taken along B-B in FIG. 6.
FIG. 8 is a cross-sectional diagram illustrating a cross-section taken along C-C in FIG. 6.
FIG. 9 is an arrow diagram in which the entirety of the oil gutter 20 is viewed from the direction of the arrow W in FIG. 7.
FIG. 10 is a rear surface diagram of an introduction section 30.
FIG. 11 is an explanatory diagram illustrating how lubricant oil scooped up by a ring gear 9 flows when the transmission 1 is operated in a forward gear stage.
FIG. 12 is an explanatory diagram illustrating how lubricant oil scooped up by the ring gear 9 flows when the transmission 1 is operated in a reverse gear stage with a cross-section taken along D-D in FIG. 10.
FIG. 13 is an enlarged planar diagram illustrating an enlarged portion of a first introduction section 142 of an oil gutter 120 of a modified example.
FIG. 14 is a cross-sectional diagram illustrating a cross-section taken along E-E in FIG. 13.

### Detailed Description of Preferred Embodiments

Next, description will be given of the best mode for carrying out a preferred embodiment of the present invention using examples.

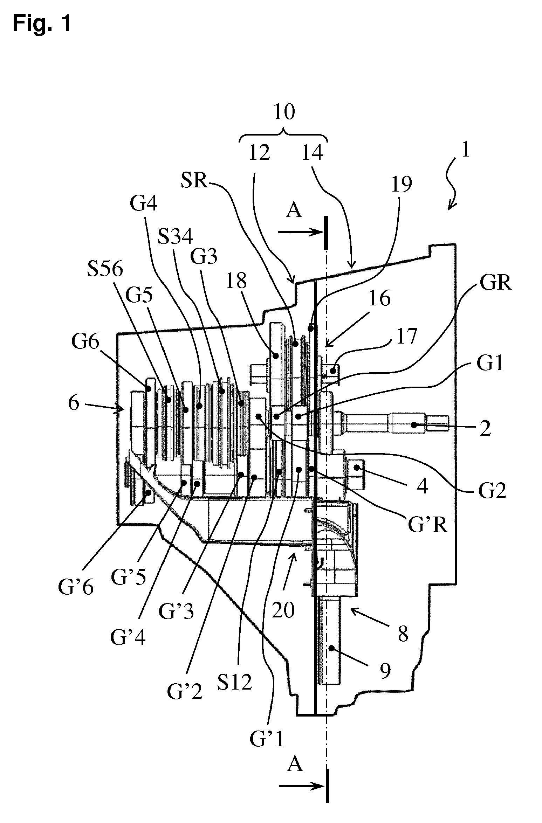

As illustrated in FIG. 1, the transmission 1 comprising the oil gutter 20 according to the present embodiment comprises an input shaft 2, a main shaft 4, a gear mechanism 6 which transmits rotation of the input shaft 2 to the main shaft 4 in accordance with gear changes, a differential mechanism 8 which transmits rotation of the main shaft 4 to an axle not illustrated in the diagram, the oil gutter 20 according to the present embodiment, and a transmission case 10 accommodating the above. The transmission 1 is configured as a manual transmission for a so-called front engine front drive (FF) vehicle mounted on an FF type vehicle in which an engine is arranged horizontally (in the left and right direction of the vehicle).

The input shaft 2 is rotatably supported in the transmission case 10 by bearings not illustrated in the diagram and a clutch (not illustrated in the diagram) is attached by spline engagement or the like to a leading end section (right side portion in FIG. 1). The input shaft 2 is configured such that power from the engine (not illustrated in the diagram) is input thereto via the clutch.

The main shaft 4 is arranged to be parallel to the input shaft 2 and rotatably supported in the transmission case 10 by bearings not illustrated in the diagram. The main shaft 4 is an example of embodiments corresponding to the "output shaft" in the present embodiment.

As illustrated in FIG. 1, the gear mechanism 6 comprises a plurality of driving gears G arranged to be fixed or rotatable on the input shaft 2, a plurality of driven gears G' arranged to be fixed or rotatable on the main shaft 4, a reverse idler mechanism 16, and a plurality of synchro mechanisms S. The gear mechanism 6 is an example of embodiments corresponding to the "parts requiring lubrication" and the "gear mechanism" in the present embodiment.

First speed and second speed driving gears G1 and G2 out of the driving gears G and a reverse driving gear GR are arranged to be fixed with respect to the input shaft 2, and third speed, fourth speed, fifth speed, and sixth speed driving gears G3, G4, G5, and G6 are arranged to be rotatable with respect to the input shaft 2.

First speed and second speed driven gears G'1 and G'2 out of the driven gears G' are arranged to be rotatable with respect to the main shaft 4, and third speed, fourth speed, fifth speed, and sixth speed driven gears G'3, G'4, G'5, and G'6 and a reverse driven gear G'R are arranged to be fixed with respect to the main shaft 4. The first speed, second speed, third speed, fourth speed, fifth speed, and sixth speed driven gears G'1, G'2, G'3, G'4, G'5, and G'6 are configured to mesh with the first speed, second speed, third speed, fourth speed, fifth speed, and sixth speed driving gears G1, G2, G3, G4, G5, and G6 respectively. The driving gears G and the driven gears G' are an example of embodiments corresponding to the "plurality of gears" in the present embodiment.

As illustrated in FIG. 1, the reverse idler mechanism 16 comprises a reverse idler shaft 17 arranged parallel to the input shaft 2 and the main shaft 4, first and second reverse idler gears 18 and 19 arranged to be rotatable on the reverse idler shaft 17, and a synchro mechanism SR arranged between the first and second reverse idler gears 18 and 19, and is configured as a reversing mechanism which reverses and transmits the rotation of the input shaft 2 to the ring gear 9 to be described below.

The synchro mechanisms S are respectively arranged between (S34) the third speed driving gear G3 and the fourth speed driving gear G4, between (S56) the fifth speed driving gear G5 and the sixth speed driving gear G6, between (S12) the first speed driven gear G'1 and the second driven gear G'2, and between (SR) the first and second reverse idler gears 18 and 19. Although not illustrated in the diagram, the synchro mechanisms S comprise a synchronization hub, a coupling sleeve, a synchronizer ring, and a clutch gear.

In addition, the synchro mechanisms S are configured such that the number of rotations of the input shaft 2 is synchronized with the number of rotations of the third speed, the fourth speed, the fifth speed, and the sixth speed driving gears G3, G4, G5, and G6 and configured such that the number of rotations of the first speed and second speed driven gears G'1 and G'2 is synchronized with that of the main shaft 4. Here, the synchro mechanism SR arranged between the first and second reverse idler gears 18 and 19 is configured such that the synchronization hub is integrally formed with the first reverse idler gear 18, and the first and second reverse idler gears 18 and 19 are integral while the number of rotations of the first reverse idler gear 18 is synchronized with that of the second reverse idler gear 19.

The differential mechanism 8 is configured to distribute and transmit power while absorbing the speed difference (difference in the number of rotations) generated in left and right wheels not illustrated in the diagram, and comprises the ring gear 9 having a large diameter. The ring gear 9 meshes with an output gear (not illustrated in the diagram) which is fixedly attached to the main shaft 4. In addition, the ring gear 9 is configured as a helical gear twisting to the right. That is, in the ring gear 9, the tooth traces are inclined upward to the right with respect to the rotational axis along the vertical direction when viewed from the front. The ring gear 9 is an example of embodiments corresponding to the "rotation member" in the present embodiment.

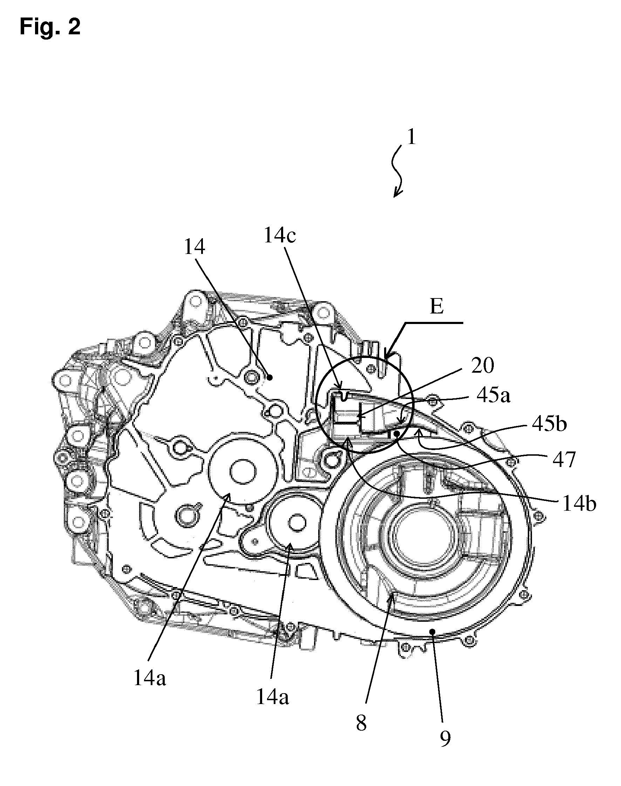

As illustrated in FIG. 1 and FIG. 2, the transmission case 10 comprises a case main body 12 configured to accommodate the input shaft 2 and the main shaft 4, the gear mechanism 6, and the oil gutter 20, and a clutch housing 14 configured to accommodate a clutch not illustrated in the diagram and the differential mechanism 8. The transmission case 10 is an example of embodiments corresponding to the "case" in the present embodiment.

As illustrated in FIG. 2, in the clutch housing 14, an attachment section 14a for attaching bearings (not illustrated in the diagram) which rotatably support the input shaft 2 and the main shaft 4 is formed, and an installation section 14b for installing the oil gutter 20 is formed. As illustrated in FIG. 2, the installation section 14b is formed above a portion accommodating the differential mechanism 8 in the clutch housing 14, that is, at a position corresponding to an upper section of the ring gear 9.

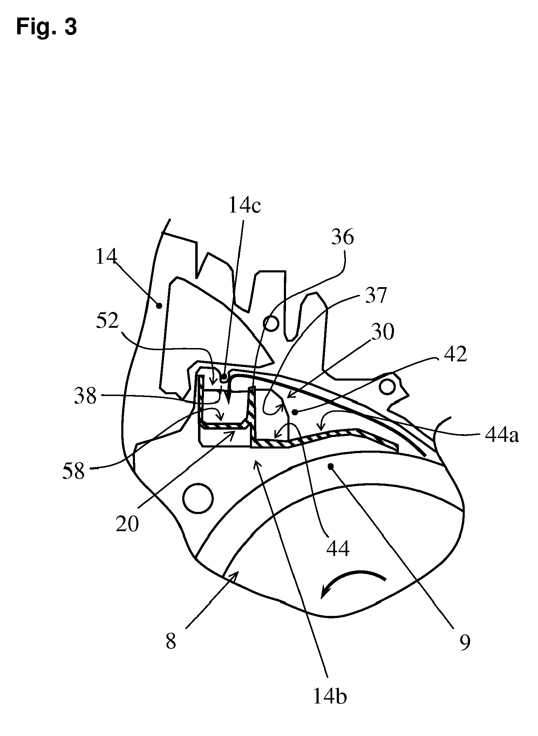

In addition, as illustrated in FIG. 2 and FIG. 3, a rib 14c protruding inward (in the direction toward the installation section 14b) is integrally formed in a portion positioned above the installation section 14b in the inner wall surface of the clutch housing 14. More specifically, the rib 14c is formed to protrude toward a second introduction section 52 in the inner wall surface above the position where the second introduction section 52 to be described below is arranged in the oil gutter 20 when the oil gutter 20 is installed in the installation section 14b. The rib 14c is an example of embodiments corresponding to the "protrusion" in the present embodiment.

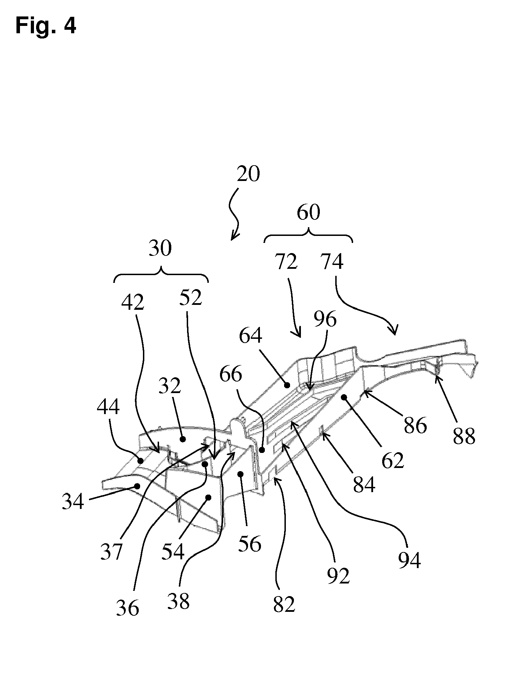

As illustrated in FIG. 4 to FIG. 6, the oil gutter 20 comprises the introduction section 30 and a flow path section 60 and is configured with a substantially hooked shape in plan view. As illustrated in FIG. 1, the oil gutter 20 is configured such that the length in the longitudinal direction is approximately the same as the total length of the main shaft 4. The flow path section 60 is an example of embodiments corresponding to the "supply flow passage" in the present embodiment.

As illustrated in FIG. 3, the introduction section 30 is configured to extend in the splashing direction of the lubricant oil scooped up and splashed by the ring gear 9 rotating in the arrow direction in FIG. 3 in a forward gear stage. Also, as illustrated in FIG. 4 to FIG. 6, the introduction section 30 comprises side walls 32 and 34, and a partition wall 36 configured to partition the introduction section 30 into a first introduction section 42 and the second introduction section 52.

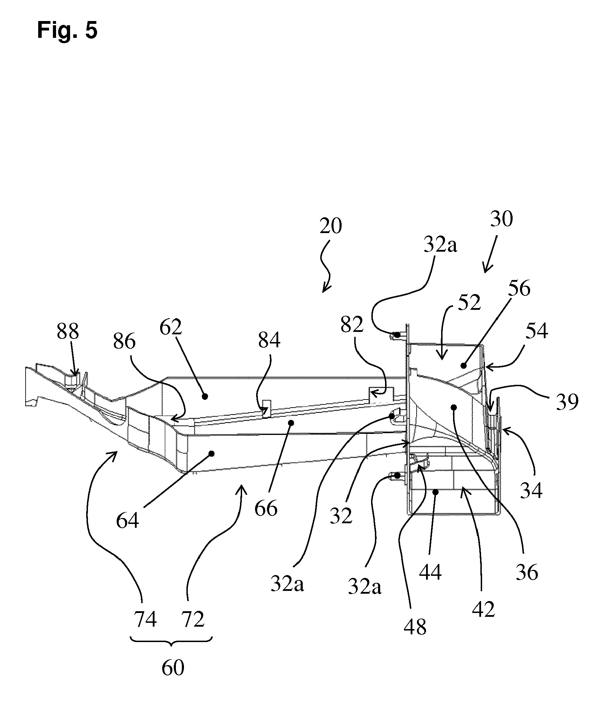

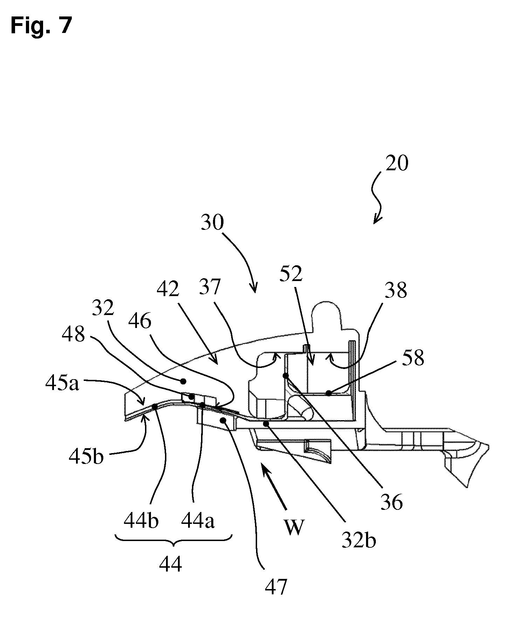

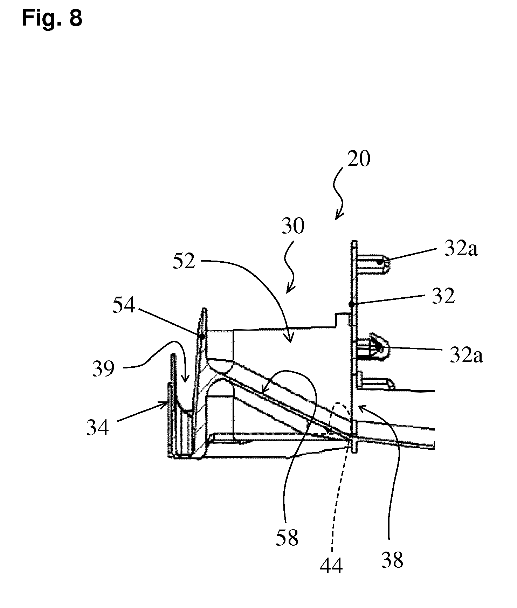

As illustrated in FIG. 7, through openings 37 and 38 are formed in the side wall 32 at both sides interposing the partition wall 36. In addition, as illustrated in FIG. 5 and FIG. 8, three attachment protrusions 32a are formed in the side wall 32 to protrude toward the opposite side to the first and second introduction sections 42 and 52. The through opening 37 corresponds to the "first opening" in the present embodiment and the through opening 38 is an example of embodiments corresponding to the "second opening" in the present embodiment.

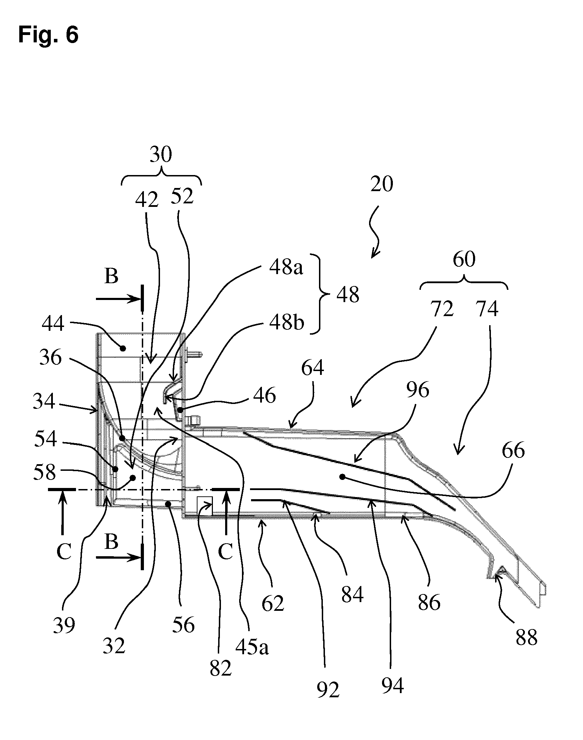

As illustrated in FIG. 6, the partition wall 36 extends diagonally in a direction which intersects with the side walls 32 and 34 such that the side wall 32 side approaches an end wall 56 to be described below and the side wall 34 side approaches a lubricant oil inlet side of the first introduction section 42. Due to this, the introduction section 30 is partitioned into the first introduction section 42 and the second introduction section 52 in the extension direction (up and down direction in FIG. 6) of the introduction section 30.

As illustrated in FIG. 4 to FIG. 6, the partition wall 36 is formed in a curved shape. Specifically, the partition wall 36 is formed in an arc shape expanding toward the second introduction section 52 side. The aspect where the partition wall 36 is formed in an arc shape expanding toward the second introduction section 52 side corresponds to the aspect "configured to have a curved surface which is convex on the second introduction section side" in the present embodiment.

The first introduction section 42 is provided in the introduction section 30 on the upstream side (the upper side in FIG. 6) in the splashing direction of the lubricant oil scooped up and splashed by the ring gear 9 rotating in a forward gear stage. Also, as illustrated in FIG. 4 and FIG. 6, the first introduction section 42 is configured from the side walls 32 and 34, the partition wall 36, and the bottom surface 44.

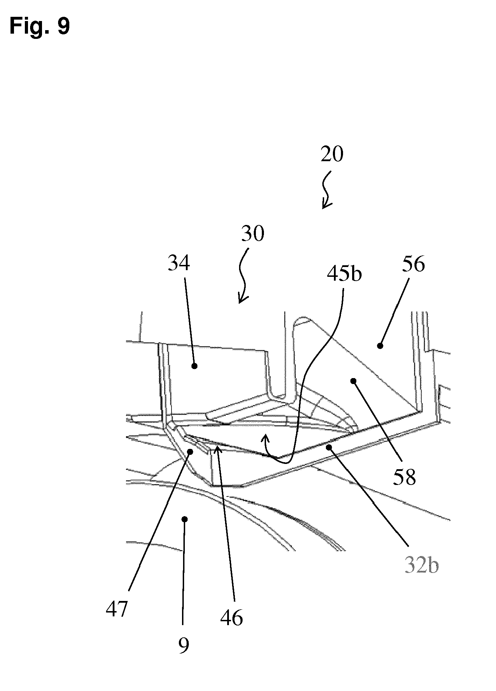

As illustrated in FIG. 7 and FIG. 9, a part of the side wall 32 protrudes to a lower surface 45b side of the bottom wall 44 and configures a protrusion 32b. The protrusion 32b is an example of embodiments corresponding to the "first protrusion" or the "second protrusion" and the "guiding-and-reversing section" in the present embodiment.

As illustrated in FIG. 7, the bottom surface 44 has an upwardly inclining section 44a inclining upward in a direction away from the partition wall 36 and a downwardly inclining section 44b formed to be continuous with the upwardly inclining section 44a and inclining downward away from the top section of the upwardly inclining section 44a.

The upwardly inclining section 44a is an example of embodiments corresponding to the "suppression section" in the present embodiment. In addition, an aspect where the first introduction section 42 is provided in the introduction section 30 on the upstream side (the upper side in FIG. 6) in the splashing direction of the lubricant oil scooped up and splashed by the ring gear 9 rotating in a forward gear stage is an example of embodiments corresponding to an aspect where "the first introduction section is arranged on the upstream side in the splashing direction relative to the partition wall" in the present embodiment.

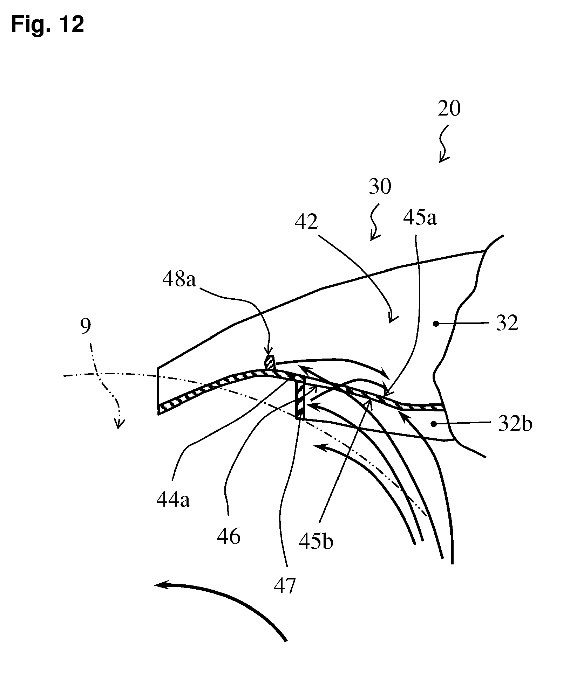

As illustrated in FIG. 6 and FIG. 12, a long hole 46 is formed in the upwardly inclining section 44a in the vicinity of a connection section with the side wall 32. That is, when the bottom surface 44 is viewed from along the extension direction of the bottom surface 44 from the downwardly inclining section 44b side, the long hole 46 is provided on the left end of the bottom surface 44 (right end in FIG. 6). The long hole 46 passes through the bottom surface 44 from an upper surface 45a to the lower surface 45b.

Here, the long hole 46 has a longitudinal direction along the extension direction of the bottom surface 44. The long hole 46 is an example of embodiments corresponding to the "through hole" in the present embodiment. In addition, an aspect where the long hole 46 is formed in the upwardly inclining section 44a in the vicinity of the connection section with the side wall 32 is an example of embodiments corresponding to "the through hole is formed in the bottom surface of the first introduction section on a left-side end section or a right-side end section with respect to the extension direction of the first introduction section" in the present embodiment.

Furthermore, as illustrated in FIG. 6, an enclosing rib 48, which is configured to enclose the periphery of the end section on the side distal to the partition wall 36 out of the longitudinal direction end sections of the long hole 46, is formed on the upper surface 45a of the bottom surface 44. The enclosing rib 48 is an example of embodiments corresponding to the "prevention wall" in the present embodiment.

As illustrated in FIG. 6, the enclosing rib 48 is configured from a first portion 48a extending from the side wall 32 in a direction which intersects with the extension direction of the first introduction section 42, and a second portion 48b formed to be continuous with the first portion 48a and extending in the longitudinal direction of the long hole 46. The first portion 48a corresponds to the "first wall section" in the present embodiment and the second portion 48b is an example of embodiments corresponding to the "second wall section" in the present embodiment.

As illustrated in FIG. 6, the second portion 48b is configured to extend to approximately the center in the longitudinal direction of the long hole 46 and to extend across approximately half of the periphery of the long hole 46. The aspect where the second portion 48b extends up to approximately the center in the longitudinal direction of the long hole 46 is an example of embodiments corresponding to the aspect where "the second wall section extends up to a substantially central section of the through hole with respect to the extension direction" in the present embodiment.

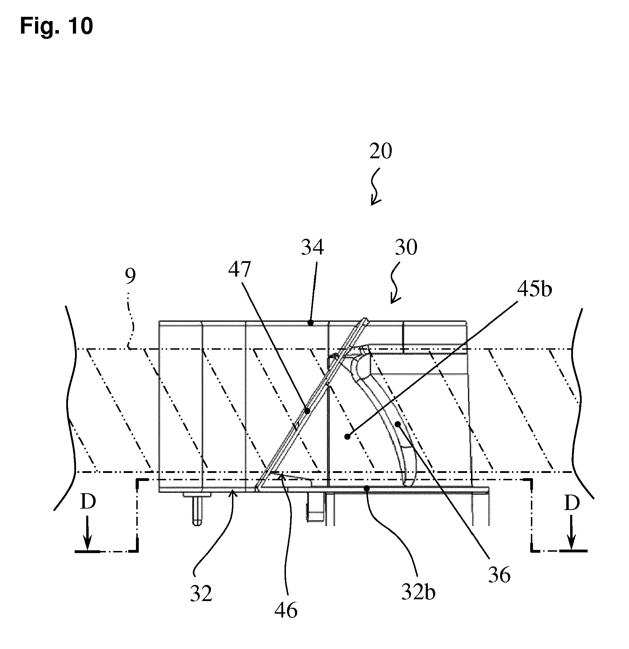

In addition, as illustrated in FIG. 9 and FIG. 10, a protrusion 47 configured to extend in a direction which intersects with the extension direction of the introduction section 30 is formed in the lower surface 45b of the bottom surface 44. One end of the protrusion 47 is connected with the side wall 34 and the other end is connected with one end of the protrusion 32b. The protrusion 47 is an example of embodiments corresponding to the "second protrusion" or the "first protrusion" and the "guiding and reversing section" in the present embodiment.

The protrusion 47 and the protrusion 32b are connected at the outer side (the left side in FIG. 10) of the end section on the side distal to the partition wall 36 out of the longitudinal direction end sections of the long hole 46 and are configured to be substantially V shaped in plan view with the interval between the two gradually opening up from the connection section toward the partition wall 36 side. An aspect where the protrusion 47 and the protrusion 32b are connected at the outer side (the left side in FIG. 10) of the end section on the side distal to the partition wall 36 out of the longitudinal direction end sections of the long hole 46 and are configured to be substantially V shaped in plan view with the interval between the two gradually opening up from the connection section toward the partition wall 36 side is an example of embodiments corresponding to the aspect where "the distance between the first and second protrusions (32b) gradually becomes smaller on the downstream side than the upstream side with respect to the splashing direction of the lubricant oil scooped up by the rotation member rotating in the second rotation direction" and "the first and second protrusions (32b) are connected with each other at the downstream-side end portion of the guiding-and-reversing section (32b) with respect to the splashing direction to be substantially V shaped or U shaped in plan view" in the present embodiment.

That is, the lower surface 45b of the bottom wall 44 is partitioned into a region (the right side in FIG. 10) on the side interposed between the protrusion 32b and the protrusion 47 which is substantially V shaped in plan view and a region other than this (the left side in FIG. 10), and the long hole 46 is arranged in the vicinity of the connection section of the protrusion 32b and the protrusion 47 in the region on the side interposed between the protrusion 32b and the protrusion 47.

As illustrated in FIG. 6, the second introduction section 52 is configured from the side wall 32, a side wall 54, the partition wall 36, the end wall 56, and a bottom surface 58. The second introduction section 52 has a box shape, the top of which is open.

As illustrated in FIG. 5, FIG. 6, and FIG. 8, the side wall 54 is arranged to be separated to the side wall 32 side (the left side in FIG. 5) at a predetermined distance in parallel to the side wall 34, and extends in the extension direction of the introduction section 30. In addition, the side wall 54 is connected with one end of the partition wall 36. Due to this, a passage section 39 where both ends (end sections in the up and down direction in FIG. 6) in the extension direction of the side wall 54 are opened is formed between the side wall 34 and the side wall 54.

As illustrated in FIG. 8, the bottom surface 58 is formed to incline downward from the side wall 54 side toward the side wall 32 side. Specifically, as illustrated in FIG. 8, the position of the bottom surface 58 in the height direction on the side wall 54 side is formed at a position higher than the position of the bottom surface 44 in the height direction, and the position of the bottom surface 58 in the height direction on the side wall 32 side is formed at approximately the same height position at the position of the bottom surface 44 in the height direction.

As illustrated in FIG. 4 to FIG. 6, the flow path section 60 has a longitudinal direction along a direction perpendicular to the introduction section 30, comprises two side walls 62 and 64, and a bottom surface 66, and is formed such that a cross-sectional shape perpendicular to the longitudinal direction is substantially U shaped. The flow path section 60 is connected with the introduction section 30 such that the end section on the side connected with the side wall 32 of the partition wall 36 is arranged approximately in the center in the flow path width direction (a direction perpendicular to the longitudinal direction and the up and down direction in FIG. 6) of the flow path section 60. Due to this, the flow path section 60 communicates with the first and second introduction sections 42 and 52 via the through openings 37 and 38.

The flow path section 60 is configured from a linear flow path section 72 connected to be perpendicular to the introduction section 30 to linearly extend from the introduction section 30, and a curved flow path section 74 which curves with respect to the linear flow path section 72, and is formed to be substantially J shaped in plan view. A side wall 62 configures a side wall on the inner side in the curving direction and a side wall 64 configures a side wall on the outer side in the curving direction. The curved flow path section 74 is configured such that the flow path width is narrowed toward the leading end section and is opened at the leading end.

As illustrated in FIG. 4 to FIG. 6, three openings 82, 84, and 86 are formed in the side wall 62 in order from the introduction section 30 side (the left side in FIG. 6). The openings 82 and 84 are formed in the side wall 62 in a portion corresponding to the linear flow path section 72 and the opening 86 is formed in the side wall 62 in a portion corresponding to the curved flow path section 74. Here, the opening 82 is formed across the bottom surface 66 from the side wall 62.

In addition, as illustrated in FIG. 4 to FIG. 6, at the leading end section of a portion corresponding to the curved flow path section 74 in the side wall 62, a protruding flow path 88 is formed to protrude toward the inside (the lower side in FIG. 6) in the curving direction.

The bottom surface 66 is configured to incline downward from the introduction section 30 side (the left side in FIG. 6) toward the leading end section side (the curved flow path section 74 side and the right side in FIG. 6). As illustrated in FIG. 4 and FIG. 6, three rectification ribs 92, 94, and 96 are formed in the bottom surface 66 to extend in the longitudinal direction of the flow path section 60. The heights of the rectification ribs 92, 94, and 96 are formed to be lower than the side walls 62 and 64.

As illustrated in FIG. 6, the rectification rib 92 is formed nearest to the side wall 62, one end is arranged at a position corresponding to the approximate center between the openings 82 and 84 and extends from this position approximately in parallel to the side wall 62, and the other end is connected with the side wall 62 at a point past the opening 84.

As illustrated in FIG. 6, the rectification rib 94 is formed further to the side wall 64 side (the upper side in FIG. 6) than the rectification rib 92, one end is arranged at approximately the same position as the rectification rib 92, that is, at a position corresponding to the approximate center between the openings 82 and 84, and extends from this position approximately in parallel to the side wall 62, and the other end is connected with the side wall 62 at a point past the opening 86.

The rectification rib 96 is formed closest to the side wall 64 side, one end is connected with the side wall 64 at approximately the same position as the rectification ribs 92 and 94, that is, at a position corresponding to the approximate center between the openings 82 and 84. The rectification rib 96 extends from this position with a diagonal shape with respect to the longitudinal direction of the linear flow path section 72 such that the other end is arranged at a position corresponding to centers of both the flow path width direction and the longitudinal direction in the curved flow path section 74.

As illustrated in FIG. 1 and FIG. 2, the oil gutter 20 configured in this manner is installed in the installation section 14b at a position corresponding to between the rotational axes of the main shaft 4 and the ring gear 9 above the ring gear 9 such that the extension direction of the introduction section 30 is approximately along the direction tangential to the ring gear 9. At this time, the lower surface 45b of the bottom wall 44 of the introduction section 30 faces the side of the outer peripheral surface of the ring gear 9 and the upper surface 45a of the bottom wall 44 of the introduction section 30 faces the opposite side to the outer peripheral surface of the ring gear 9, that is, the upper surface 45a faces a portion positioned above the installation section 14b in the inner wall surface of the clutch housing 14.

Due to this, the flow path section 60 is arranged such that the longitudinal direction of the linear flow path section 72 and the axial directions of the input shaft 2 and the main shaft 4 are parallel, the leading end section of the curved flow path section 74 faces the input shaft 2 side, and the side wall 62 is on the input shaft 2 and the main shaft 4 side.

Next, description will be given of the operation of the transmission 1 configured in this manner, in particular, the operation when lubricant oil scooped up by the ring gear 9 is supplied to parts requiring lubrication such as the gear mechanism 6. First, description will be given when the transmission 1 is operated in a forward gear stage from the first speed to the sixth speed, and then description will be given when the transmission 1 is operated in a reverse gear stage.

When the transmission 1 is operated in a forward gear stage and the ring gear 9 rotates (counter-clockwise in the arrow direction in FIG. 3), the lubricant oil stored in the transmission case 10 is scooped up. As illustrated in FIG. 3, the scooped up lubricant oil is introduced into the introduction section 30 configured to extend in a direction tangential to the ring gear 9. Here, when the transmission 1 is operated in a low speed gear stage such as the first speed or the second speed, since the rotation speed of the ring gear 9 is a comparatively low speed, almost all of the lubricant oil scooped up by the ring gear 9 is collected in the first introduction section 42 and the direction of the flow is changed following a collision with the partition wall 36. The direction in which the ring gear 9 rotates when the transmission 1 is operated in a forward gear stage is an example of embodiments corresponding to the "first rotation direction" in the present embodiment.

That is, when the rotation speed of the ring gear 9 is a comparatively low speed, almost all of the lubricant oil scooped up by the ring gear 9 is collected in the first introduction section 42 and flows from the first introduction section 42 into the flow path section 60 through the through opening 37. Here, since the partition wall 36 is inclined such that the lubricant oil collected in the first introduction section 42 is guided to the flow path section 60, the lubricant oil can be rapidly introduced into the flow path section 60 without remaining in the first introduction section 42.

In addition, since the partition wall 36 is formed in an arc shape expanding toward the second introduction section 52 side, the flow direction of the lubricant oil can be smoothly changed to the through opening 37 side. Thus the lubricant oil can be more rapidly guided to the flow path section 60 in comparison with when the partition wall 36 is a flat surface.

Here, the long hole 46 is formed in the bottom surface 44 of the first introduction section 42; however, since the enclosing rib 48 is formed to enclose the periphery at the end section at the side distal to the partition wall 36 out of the longitudinal direction end sections of the long hole 46, the lubricant oil collected in the first introduction section 42 and flowing on the upper surface 45a of the bottom surface 44 can be prevented from flowing out from the long hole 46. Moreover, because the second portion 48b in the enclosing rib 48 is configured to extend up to approximately the center of the long hole 46 in the longitudinal direction, it is possible to more effectively prevent the lubricant oil from flowing out from the long hole 46.

In addition, since the long hole 46 and the enclosing rib 48 are provided on the left end of the bottom surface 44 when the bottom surface 44 of the first introduction section 42 is seen from along the extension direction of the bottom surface 44 from the downwardly inclining section 44b side, the main flow of the lubricant oil flowing downstream on the upper surface 45a of the bottom surface 44 is not easily influenced by the long hole 46 or the enclosing rib 48. Due to this, it is possible to suppress deterioration in the collection efficiency of the lubricant oil.

Moreover, since the ring gear 9 is configured as a helical gear which twists to the right, the scooped up lubricant oil is directed to the side where the long hole 46 is not arranged in the bottom surface 44 of the first introduction section 42, that is, the right side (the left side in FIG. 6) of the bottom surface 44. Due to this, it is possible to more effectively suppress the lubricant oil from flowing out from the long hole 46.

Here, since the bottom surface 44 of the first introduction section 42 has the upwardly inclining section 44a, it is possible to suppress movement of the lubricant oil trying to flow back in the first introduction section 42 (trying to flow in the opposite direction against the splashing direction of the lubricant oil) due to the recoil following a collision with the partition wall 36 and it is possible to more effectively guide the lubricant oil to the flow path section 60. Due to this, the lubricant oil can be efficiently and rapidly guided to the flow path section 60. Here, since only the bottom surface 44 of the first introduction section 42 is formed to incline upward in this configuration, the configuration is also simple.

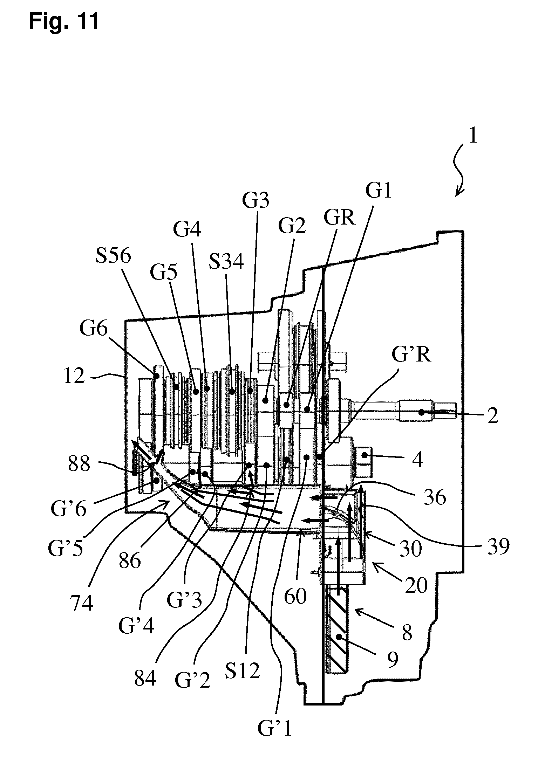

As illustrated in FIG. 11, the lubricant oil flowing into the flow path section 60 flows out from the openings 84 and 86, the protrusion flow path 88, and the leading end of the curved flow path section 74. The lubricant oil flowing out from the opening 84 is supplied onto the third speed driven gear G'3 and lubricates the third speed driven gear G'3 and the meshing section between the third speed driving gear G3 and the third speed driven gear G'3. The lubricant oil flowing out from the opening 86 is supplied onto the fourth speed driven gear G'4 and lubricates the fourth speed driven gear G'4 and the meshing section between the fourth speed driving gear G4 and the fourth speed driven gear G'4. The lubricant oil flowing out of the protrusion flow path 88 is supplied onto the sixth speed driving gear G6 and lubricates the sixth speed driving gear G6, the meshing section between the sixth speed driving gear G6 and the sixth speed driven gear G'6, a sixth speed clutch gear, and the like.

In addition, the lubricant oil flowing out from the leading end of the curved flow path section 74 is supplied to an in-shaft oil passage (not illustrated in the diagram) formed in the input shaft 2 through a flow path (not illustrated in the diagram) formed in the case main body 12. The lubricant oil supplied to the in-shaft oil passage (not illustrated in the diagram) is supplied to the synchro mechanism S and the like arranged on the input shaft 2 via a radial hole not illustrated in the diagram formed in the input shaft 2.

Here, since the bottom surface 66 of the flow path section 60 is configured to incline downward downstream (to the curved flow path section 74 side), the lubricant oil can be rapidly and effectively supplied up to a position (the leading end section of the curved flow path section 74) distal to the ring gear 9. In addition, because the curved flow path section 74 is configured such that the flow path width gradually narrows toward the leading end, the flow rate of the lubricant oil can be increased, and the lubricant oil can effectively flow up to the leading end section (the leading end of the oil gutter 20) of the curved flow path section 74.

On the other hand, the rotation speed of the ring gear 9 is increased as the transmission 1 is operated in a high-speed gear stage such as the third speed to the sixth speed, and a part of the lubricant oil scooped up by the ring gear 9 and collected in the first introduction section 42 goes beyond the partition wall 36 and flows into the second introduction section 52. At this time, since the kinetic energy of the lubricant oil is reduced by the partition wall 36, the lubricant oil can be effectively collected in the second introduction section 52. Here, since the bottom surface 58 of the second introduction section 52 is configured to incline downward toward the through opening 38, the lubricant oil collected in the second introduction section 52 can be rapidly introduced into the flow path section 60 via the through opening 38.

That is, when the rotation speed of the ring gear 9 is high, since the lubricant oil scooped up by the ring gear 9 can be introduced into the flow path section 60 through the through openings 37 and 38 after being collected in both of the first and second introduction sections 42 and 52, the lubricant oil scooped up by the ring gear 9 can be efficiently collected without waste. Here, even in this case, the movement of the lubricant oil trying to flow back in the first introduction section 42 (trying to flow in the opposite direction against the splashing direction of the lubricant oil) due to the recoil following a collision with the partition wall 36 can be effectively suppressed by the upwardly inclining section 44a of the bottom surface 44 in the first introduction section 42. Due to this, the lubricant oil can be efficiently guided to the flow path section 60.

Then, in the same manner as when the rotation speed of the ring gear 9 is low, the lubricant oil flowing into the flow path section 60 is supplied to each section (the third speed driven gear G'3 and a meshing section between the third speed driving gear G3 and the third speed driven gear G'3, the fourth speed driven gear G'4 and a meshing section between the fourth speed driving gear G4 and the fourth speed driven gear G'4, the sixth speed driven gear G'6 and a meshing section between the sixth speed driving gear G6 and the sixth speed driven gear G'6, the sixth speed clutch gear, and an in-shaft oil passage (not illustrated in the diagram) formed in the input shaft 2) by flowing out from the openings 84 and 86, the protrusion flow path 88, and the leading end of the curved flow path section 74.

Here, as illustrated in FIG. 3, out of the lubricant oil scooped up by the ring gear 9, the lubricant oil which passes beyond the partition wall 36 without colliding with the partition wall 36 collides with the rib 14c formed on the inner wall surface of the clutch housing 14 and flows down along the rib 14c to be collected by the second introduction section 52. Due to this, the lubricant oil scooped up by the ring gear 9 can be more efficiently collected without waste and supplied to the parts requiring lubrication.

In addition, as illustrated in FIG. 11, a part of the lubricant oil scooped up by the ring gear 9 and introduced into the introduction section 30 is supplied to an in-shaft oil passage (not illustrated in the diagram) formed in the main shaft 4 via the passage section 39. The lubricant oil supplied to the in-shaft oil passage (not illustrated in the diagram) is supplied to the synchro mechanism S arranged on the main shaft 4 via a radial hole (not illustrated in the diagram) formed in the main shaft 4.

In addition, the oil gutter 20 according to the present embodiment is configured to collect the lubricant oil scooped up by the first speed driven gear G'1 in addition to the ring gear 9. The lubricant oil scooped up by the first speed driven gear G'1 is taken into the linear flow path section 72 via the opening 82. Due to this, it is possible to secure a sufficient oil supply amount even in a low speed gear stage (for example, the first speed or second speed) where the number of rotations of the ring gear 9 is low.

Next, description will be given when the transmission 1 is operated in a reverse gear stage. When the transmission 1 is operated in a reverse gear stage, the ring gear 9 rotates in the opposite direction to when the transmission 1 is operated in a forward gear stage (clockwise in FIG. 3 and counter-clockwise in FIG. 12). Due to this, the lubricant oil stored in the transmission case 10 is scooped up in the opposite direction to when the transmission 1 is operated in a forward gear stage. The direction in which the ring gear 9 rotates when the transmission 1 is operated in a reverse gear stage (the opposite direction to when the transmission 1 is operated in a forward gear stage) is an example of embodiments corresponding to the "second rotation direction" in the present embodiment.

As illustrated in FIG. 12, a part of the lubricant oil scooped up by the ring gear 9 is guided to the long hole 46 by the protrusion 32b and the protrusion 47 when the ring gear 9 is rotating in the opposite direction to a rotating direction in the case the transmission 1 operates in a forward gear stage. Here, since the ring gear 9 is configured as a helical gear which twists to the right, when the ring gear 9 rotates in the opposite direction to the rotating direction in the case of operating in a forward gear stage, the scooped up lubricant oil splashes in the direction of the long hole 46 (the lower side in FIG. 10).

Due to this, the lubricant oil can be effectively guided to the long hole 46. In this manner, by providing the long hole 46, the protrusion 32b, and the protrusion 47 to match the twisting direction of the ring gear 9, it is possible to improve the introduction efficiency of the lubricant oil to the first introduction section 42 via the long hole 46. Then, the splashing direction of a part of the scooped up and splashed lubricant oil is reversed due to the collision with the protrusion 32b and the protrusion 47.

As illustrated in FIG. 12, the lubricant oil guided to the long hole 46 and for which the splashing direction is reversed is introduced from the long hole 46 into the first introduction section 42. Here, since the long hole 46 is formed on the upwardly inclining section 44a, the lubricant oil for which the splashing direction is reversed by the protrusion 32b and the protrusion 47 is easily introduced from the long hole 46 into the first introduction section 42.

On the other hand, a part of the lubricant oil guided to the long hole 46 and introduced from the long hole 46 into the first introduction section 42 without the splashing direction thereof being reversed by the protrusion 32b and the protrusion 47 collides with the enclosing rib 48 and the flow direction thereof is reversed. In this manner, since the configuration can also reverse the splashing direction of the lubricant oil with the enclosing rib 48 in addition to the protrusion 32b and the protrusion 47, the lubricant oil can be efficiently introduced into the first introduction section 42.

In this manner, the lubricant oil introduced into the first introduction section 42 flows down toward the partition wall 36 due to the upwardly inclining section 44a of the bottom surface 44 of the first introduction section 42, is guided to the through opening 37 by the partition wall 36, and is introduced into the flow path section 60 through the through opening 37. Here, an aspect where the lubricant oil introduced into the first introduction section 42 flows down toward the partition wall 36 due to the upwardly inclining section 44a of the bottom surface 44 of the first introduction section 42 is an example of embodiments corresponding to the aspect where "the lubricant oil introduced into the first introduction section can flow downstream" in the present embodiment.

Then, in the same manner as when the transmission 1 is operated in a forward gear stage, the lubricant oil flowing into the flow path section 60 is supplied (refer to FIG. 11) to each section (the third speed driven gear G'3 and a meshing section between the third speed driving gear G3 and the third speed driven gear G'3, the fourth speed driven gear G'4 and a meshing section between the fourth speed driving gear G4 and the fourth speed driven gear G'4, the sixth speed driven gear G'6 and a meshing section between the sixth speed driving gear G6 and the sixth speed driven gear G'6, the sixth speed clutch gear, and an in-shaft oil passage (not illustrated in the diagram) formed in the input shaft 2) by flowing out from the openings 84 and 86, the protrusion flow path 88, and the leading end of the curved flow path section 74.

According to the transmission 1 according to the present embodiment described above, the introduction section 30 of the oil gutter 20 is partitioned into the first introduction section 42 and the second introduction section 52 in the extension direction of the introduction section 30 by the partition wall 36 inclining with an arc shape, the upwardly inclining section 44a inclining upward in the direction away from the partition wall 36 is formed in the bottom surface 44 of the first introduction section 42, and the bottom surface 58 of the second introduction section 52 is configured to be formed to incline downward from the side wall 54 side toward the side wall 32 side (the through opening 38 side). Thus, the lubricant oil scooped up by the transmission 1 operating in a forward gear stage and the ring gear 9 rotating can be introduced into the flow path section 60 by being guided to the through opening 37 side by colliding with the partition wall 36, and the lubricant oil passing beyond the partition wall 36 can be introduced from the through opening 38 into the flow path section 60 by being guided to the second introduction section 52.

Here, the flow of the lubricant oil trying to flow back due to colliding with the partition wall 36 is suppressed by the upwardly inclining section 44a and the flow of the lubricant oil to the through openings 37 and 38 side is promoted by the upwardly inclining section 44a and the downward inclination of the bottom surface 58. Due to this, the lubricant oil can be efficiently collected regardless of the rotation speed of the ring gear 9 and the collected lubricant oil can be rapidly and effectively supplied to the parts requiring lubrication. As a result, the lubrication performance is improved.

In addition, in this configuration, when the transmission 1 is operated in a reverse gear stage, the lubricant oil scooped up by the ring gear 9 rotating in the opposite direction to when the transmission 1 is operated in a forward gear stage is guided to the long hole 46 by the protrusion 32b and the protrusion 47 and is introduced from the long hole 46 into the first introduction section 42 by reversing the splashing direction of the lubricant oil, and then the lubricant oil introduced into the first introduction section 42 is supplied to the gear mechanism 6 as parts requiring lubrication via the flow path section 60. Thus, regardless of the rotation direction of the ring gear 9, it is possible to collect sufficient lubricant oil and to further improve the lubrication performance.

In the present embodiment, the partition wall 36 is configured to be formed in an arc shape expanding toward the second introduction section 52 side; however, the present invention is not limited thereto. For example, it may be a configured so that the partition wall 36 is formed in a polygonal shape expanding toward the second introduction section 52 side, or may be configured so that the partition wall 36 is formed with a flat shape.

In the present embodiment, the oil gutter 20 is configured to be installed at a position corresponding to between the rotational axes of the main shaft 4 and the ring gear 9 above the ring gear 9; however, as long as the lubricant oil scooped up by the ring gear 9 can be introduced into the introduction section 30, the oil gutter 20 may be configured to be arranged at any position.

In the present embodiment, the rib 14c is configured to be formed integrally with the inner wall surface of the clutch housing 14; however, the rib 14c may be separate from the clutch housing 14. In such a case, the rib 14c may be configured to be attached and fixed to the clutch housing 14 by welding, bolting, or the like.

The present embodiment is configured with one end of the protrusion 47 connected with the side wall 34 and the other end connected with one end of the protrusion 32b; however, the one end of the protrusion 47 need not be connected with the side wall 34.

The present embodiment is configured with the protrusion 32b formed by a part of the side wall 32 protruding to the lower surface 45b side of the bottom surface 44 of the first introduction section 42; however, the protrusion 32b may be configured to be provided separately from the side wall 32.

In the present embodiment, the long hole 46 is configured to be formed in the upwardly inclining section 44a of the bottom surface 44 of the first introduction section 42; however, the present invention is not limited thereto. For example, the long hole 46 may be configured to be provided in the horizontal section of the bottom surface 44 of the first introduction section 42 and, as long as the lubricant oil can be introduced into the first introduction section 42 via the long hole 46, the long hole 46 may be configured to be formed in any portion of the bottom surface 44 of the first introduction section 42.

In the present embodiment, the long hole 46 is used; however, a round hole, a square hole, or a hole with another shape may be used.

In the present embodiment, since the ring gear 9 is a helical gear which twists to the right, the long hole 46 is configured to be provided at the left end of the bottom surface 44 of the first introduction section 42. However, when the ring gear 9 is a helical gear which twists to the left, the long hole 46 may be configured to be provided at the right end of the bottom surface 44 of the first introduction section 42.

In the present embodiment, the protrusion 32b and the protrusion 47 are configured to be substantially V shaped in plan view; however, the present invention is not limited thereto. For example, the protrusion 32b and the protrusion 47 may be configured to be substantially U shaped in plan view. In such a case, the long hole 46 may be configured to be provided in the vicinity of the bottom section of the U shape.

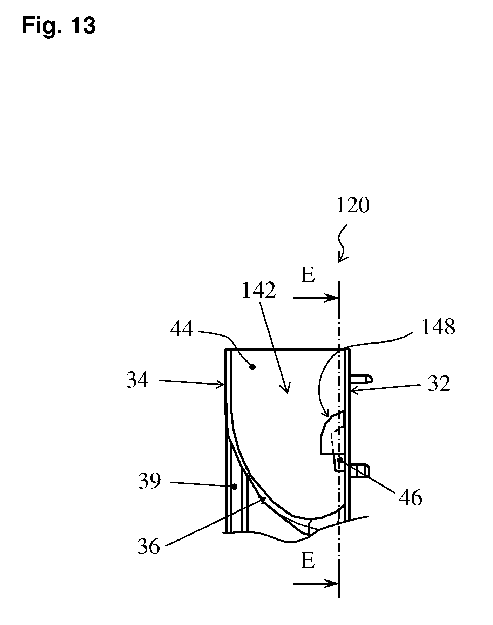

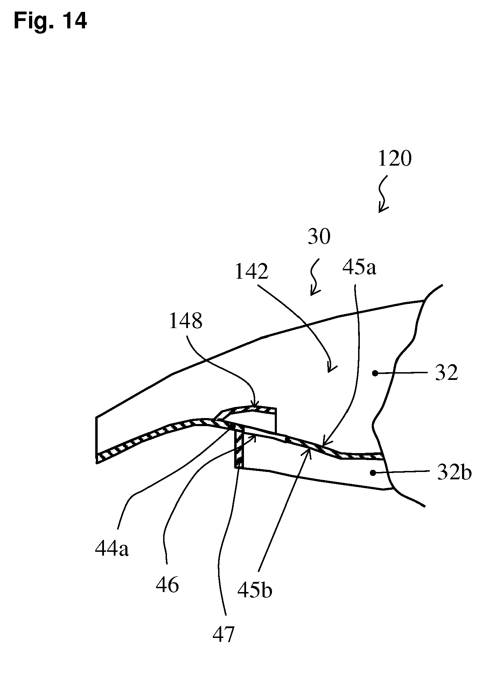

The present embodiment is configured to comprise the enclosing rib 48 enclosing the periphery of the long hole 46 in order that, when the transmission 1 operates in a forward gear stage, the lubricant oil scooped up by the rotation of the ring gear 9 and introduced into the first introduction section 42 is prevented from flowing out from the long hole 46. However, as long as it is possible to prevent the lubricant oil flowing on the upper surface 45a of the first introduction section 42 from flowing out from the long hole 46, a rib is not necessary. For example, as illustrated in the oil gutter 120 of a modified example illustrated in FIG. 13 and FIG. 14, a configuration may comprise a circular lid 148 which covers approximately the whole upper section of the long hole 46. According to this configuration, it is possible to effectively prevent the lubricant oil collected in the first introduction section 142 and flowing on the upper surface of the bottom surface 44 of the first introduction section 42 from flowing down from the long hole 46.

In the present embodiment, the second portion 48b of the enclosing rib 48 is configured to extend to approximately the center in the longitudinal direction of the long hole 46; however, a configuration shorter than this may be adopted, or a longer configuration may be adopted. Alternatively, a configuration which does not have the second portion 48b may be adopted.

In the present embodiment, the present invention is applied to a manual transmission for a front engine, front drive (FF) vehicle mounted on an FF type vehicle; however, the present invention may be applied to a manual transmission for an FR vehicle mounted on a front engine, rear drive (FR) type vehicle.

The present embodiment illustrates an example of an aspect for carrying out the present invention. Accordingly, the present invention is not limited to the configuration of the present embodiment.

### Reference Signs List

1 Transmission (transmission)
2 Input shaft (input shaft)
4 Main shaft (output shaft)
6 Gear mechanism (part requiring lubrication, gear mechanism)
8 Differential mechanism (differential mechanism)
9 Ring gear (rotation member)
10 Transmission case (case)
12 Main case body
14 Clutch housing
14a Attachment section
14b Installation section
14c Rib (protrusion)
16 Reverse idler mechanism
+17 Reverse idler shaft
18 First reverse idler gear
19 Second reverse idler gear
20 Oil gutter (oil gutter)
30 Introduction section (introduction section)
32 Side wall
32a Attachment protrusion
32b Protrusion (first protrusion, second protrusion, guiding and reversing section) 34 Side wall
36 Partition wall (partition wall)
37 Through opening (first opening)
38 Through opening (second opening)
39 Passage section (passage section)
42 First introduction section (first introduction section)
44 Bottom surface (bottom surface of first introduction section)
44a Upwardly inclining section (suppression section)
44b Downwardly inclining section
45a Upper surface (upper surface)
45b Lower surface (lower surface)
46 Long hole (through hole)
47 Protrusion (first protrusion, second protrusion, guiding and reversing section)
48 Enclosing rib
48a First portion (first wall section)
48b Second portion (second wall section)
52 Second introduction section (second introduction section)
54 Side wall
56 End wall
58 Bottom surface (bottom surface)
60 supply flow passage
62 Side wall
64 Side wall
66 Bottom surface
72 Linear flow path section
74 Curved flow path section
82 Opening
84 Opening
86 Opening
88 Protrusion flow path
92 Rectification rib
94 Rectification rib
96 Rectification rib
130 Oil gutter
142 First introduction section
148 Circular lid
G Driving gear (plurality of gears)
G1 First speed driving gear (plurality of gears)
G2 Second speed driving gear (plurality of gears)
G3 Third speed driving gear (plurality of gears)
G4 Fourth speed driving gear (plurality of gears)
G5 Fifth speed driving gear (plurality of gears)
G6 Sixth speed driving gear (plurality of gears)
GR Reverse drive gear (plurality of gears)
G' Driven gear (plurality of gears)
G'1 First speed driven gear (plurality of gears)
G'2 Second speed driven gear (plurality of gears)
G'3 Third speed driven gear (plurality of gears)
G'4 Fourth speed driven gear (plurality of gears)
G'5 Fifth speed driven gear (plurality of gears)
G'6 Sixth speed driven gear (plurality of gears)
G'R Reverse driven gear (plurality of gears)
S Synchro mechanism
S12 Synchro mechanism
S34 Synchro mechanism
S56 Synchro mechanism
SR Synchro mechanism

## Claims

1. An oil gutter for collecting lubricant oil scooped up by a rotation member (9) and
suppling to outside parts requiring lubrication, the oil gutter comprising:
an introduction section (30) extending in a splashing direction of lubricant oil scooped up by the rotation member (9) rotating in a first rotation direction, and collecting the lubricant oil scooped up by the rotation member (9); and
a supply flow passage (60) extending in a direction intersecting with an extension direction of the introduction section (30) for supplying the lubricant oil collected to the introduction section (30) to the outside parts requiring the lubricant oil,
wherein
the introduction section (30) is partitioned into a first introduction section (42) and a second introduction section (52) by a partition wall (36) interposed between the first and second introduction sections (42, 52),
the first introduction section (42) is arranged on an upstream side in the splashing direction relative to the partition wall (36), and has a suppression section (44a) configured to suppress the lubricant oil to flow back to a direction opposing to the splashing direction,
the second introduction section (52) is arranged on a downstream side in the splashing direction relative to the partition wall (36), and has a bottom surface (58) inclining downward toward the supply flow passage (60),
a first opening (37) is formed in the first introduction section (42) to guide the lubricant oil from the first introduction section (42) into the supply flow passage (60), and
a second opening (38) is formed in the second introduction section (52) to guide the lubricant oil from the second introduction section (52) into the supply flow passage (60).

2. The oil gutter according to claim 1, wherein the partition wall (36) is configured to guide the lubricant oil colliding with the partition wall (36) toward the supply flow passage (60).

3. The oil gutter according to claim 1 or 2, wherein the partition wall (36) is configured to have a curved surface which is convex on the second introduction section side.

4. The oil gutter according to any one of claims 1 to 3, wherein
the first introduction section (42) has a bottom surface (44) inclining upward in a direction away from the partition wall (36) so as to form the suppression section (42a).

5. The oil gutter according to any one of claims 1 to 4, wherein
the introduction section (30) has a passage section (39) configured to extend in the splashing direction of the lubricant oil scooped up by the rotation member rotating in the first rotation direction,
both ends in an extension direction of the passage section (39) are opened and one of the openings communicates with the first introduction section (42) such that a part of the lubricant oil introduced into the first introduction section (42) flows into the passage section (39) via the one opening and flows out via the other opening.

6. The oil gutter according to any one of claims 1 to 5, wherein
the first introduction section (42) has a bottom surface (44) including a lower surface (45b) and an upper surface (45a),
the lower surface (45b) being configured to face to an outer peripheral surface of the rotation member (9),
the upper surface (45a) being configured to face to a direction opposite toward the outer peripheral surface of the rotation member (9) such that the lubricant oil introduced into the first introduction section (42) can flow downstream, and
a through hole (46) being formed in the bottom surface (44) to pass through the upper surface (45a) and the lower surface (45b), and
the lower surface (45b) includes a guiding-and-reversing section (32b, 47) configured such that the lubricant oil scooped up by the rotation member rotating in a second rotation direction is guided to the through hole (46) and introduced via the through hole (46) to the upper surface (45a) by reversing a splashing direction of the lubricant oil scooped up by the rotation member rotating in the second rotation direction, the second roration direction being a direction opposite to the first rotation direction.

7. The oil gutter according to claim 6, wherein
the guiding-and-reversing section (32b, 47) has first and second protrusions (32b, 47) configured to protrude from the lower surface (45b) toward the outer peripheral surface of the rotation member (9),
the distance between the first and second protrusions (32b, 47) gradually becomes smaller on the downstream side than the upstream side with respect to the splashing direction of the lubricant oil scooped up by the rotation member rotating in the second rotation direction,
the first and second protrusions (32b, 47) are connected with each other at the downstream-side end portion of the guiding-and-reversing section (32b, 47) with respect to the splashing direction to be substantially V shaped or U shaped in plan view, and
the through hole (46) is formed in a vicinity of a connection section of the first and second protrusions (32b, 47) within a region interposed between the first and second protrusions (32b, 47).

8. The oil gutter according to claim 6 or 7, wherein the through hole (46) is formed in the bottom surface (44) of the first introduction section (42) on a left-side end section or a right-side end section with respect to the extension direction of the first introduction section (42).

9. The oil gutter according to any one of claims 6 to 8, wherein the through hole (46) is formed in the suppression section (44a).

10. The oil gutter according to any one of claims 6 to 9, wherein
the upper surface (45a) includes a prevention wall (48) configured to prevent the lubricant oil scooped up by the rotation member rotating in the first rotation direction and flowing downstream on the upper surface (45a) of the first introduction section (42) from flowing out from the through hole (46).

11. The oil gutter according to claim 10, wherein
the through hole (46) is formed to extend along the extension direction of the first introduction section (42),
the prevention wall (48) includes a first wall section (48a) and a second wall section (48b),
the first wall section (48a) extending in a direction intersecting with the extension direction of the first introduction section (42), and
the second wall section (48b) being continuous with the first wall section (48a) and extending in a direction along the extension direction of the first introduction section (42), and
the second wall section (48b) extends up to a substantially central section of the through hole (46) with respect to the extension direction.

12. A transmission (1) comprising:
an input shaft (2);
an output shaft (4);
a gear mechanism (6) configured to transmit rotation of the input shaft (2) to the output shaft (4) with a changeable gear ratio;
a differential mechanism (8) configured to transmit rotation transmitted to the output shaft (4) to an axle;
the oil gutter (20) according to any one of claims 1 to 11;
a case (10) accommodating the input shaft (2), the output shaft (4), the gear mechanism (6), the differential mechanism (8), and the oil gutter (20),
wherein
the differential mechanism (8) has a ring gear (9), and
the transmission (1) is configured such that the oil gutter (20) collects the lubricant oil scooped up by the ring gear (9) and supplies the collected lubricant oil to the gear mechanism (6).

13. The transmission according to claim 12, wherein
the oil gutter (20) is configured such that the through hole (46) is formed in the bottom surface (44) of the first introduction section (42) on a left-side end section or a right-side end section with respect to the extension direction of the first introduction section (42), and
the ring gear (9) is configured as a helical gear having a twisting direction which directs the lubricant oil scooped up toward the through hole (46) when the ring gear (9) rotates in the second rotation direction.

14. The transmission (1) according to claim 12 or 13, wherein
the case (10) has a protrusion (14c) at a position above the second introduction section (52), and
the protrusion (14c), the ring gear (9), and the second introduction section (52) are configured such that a part of the lubricant oil scooped up by the ring gear (9) rotating in the first rotation direction is introduced into the second introduction section (52) by colliding with the protrusion (14c) and is conveyed along the protrusion (14c).

15. A transmission (1) comprising:
an input shaft (2);
an output shaft (4);
a gear mechanism (6) transmitting rotation of the input shaft (2) to the output shaft (4) with a changeable gear ratio;
the oil gutter (20) according to any one of claims 1 to 11; and
a case (10) accommodating the input shaft (2), the output shaft (4), the gear mechanism (6), and the oil gutter (20),
wherein
the gear mechanism (6) has a plurality of gears, and
the transmission (1) is configured such that the lubricant oil scooped up by at least one of the gears is collected in the oil gutter (20) and the collected lubricant oil is supplied to the gear mechanism (6).

16. The transmission according to claim 15, wherein
the case (10) has a protrusion (14c) at a position above the second introduction section (52), and
the protrusion (14c), the at least one of the gears, and the second introduction section (52) are configured such that a part of lubricant oil scooped up by the gear rotating in the first rotation direction is introduced into the second introduction section (52) by colliding with the protrusion (14c) and is conveyed along the protrusion (14c).
